# FASCICULE DE BREVET EUROPEEN

(11) **EP 0 466 620 B1**
(45) Date de publication et mention de la délivrance du brevet: **02.03.1994**
(21) Numéro de dépôt: 91420244.5
(22) Date de dépôt: 12.07.1991
(51) Int. Cl.: F26B 21/00, F26B 15/08, B01D 63/02

(54) **Procédé et dispositif de séchage des extrémités d'un faisceau de fibres creuses pour un appareil à membrane constituée de fibres creuses**
Verfahren und Vorrichtung zur Trocknung der Enden eines Hohlfadenbündels für einen Apparat mit einer aus Hohlfäden gebildeten Membran
Process and apparatus for drying the ends of a bundle of hollow fibres for a device having a membrane consisting of hollow fibres

(30) Priorité: 13.07.1990 FR 9009199
(43) Date de publication de la demande: 15.01.1992
(73) Titulaire: HOSPAL INDUSTRIE, F-69883 Meyzieu Cédex (FR)
(72) Inventeur: Porta, Julien, F-38230 Chavanoz (FR); Clermont, Christian, F-69480 Anse (FR)

(56) Documents cités:
- EP-A- 0 044 075
- EP-A- 0 203 378
- GB-A- 892 089
- US-A- 4 237 596

## Description

L'invention concerne un procédé et un dispositif de séchage des extrémités d'un faisceau de fibres creuses pour tout appareil à membrane dont la membrane est constituée d'un faisceau de fibres creuses devant être conservées humides et être assemblées les une aux autres par collage, sur une partie de leur longueur.

De tels appareils à membrane sont utilisés dans des domaines variés, auxquels ils sont adaptés spécifiquement en particulier par le choix de la nature chimique de leur membrane. A cette catégorie d'appareils à membrane appartiennent par exemple certains types de filtres à eau, d'appareils d'osmose inverse, utilisés notamment pour le dessalement des eaux salines, et d'hémodialyseurs, utilisés pour l'épuration du sang des insuffisants rénaux, par dialyse et/ou filtration.

Dans la suite, pour illustrer le procédé selon l'invention et le dispositif pour sa mise en oeuvre, on prendra l'exemple d'hémodialyseurs, étant entendu que cette exemplification ne saurait être comprise comme restreignant la portée de l'invention au seul domaine médical.

De façon classique, un hémodialyseur à fibres creuses comprend un faisceau de fibres creuses disposé dans un boîtier tubulaire aux deux extrémités duquel il est assujetti par collage au moyen d'un joint dans lequel les fibres sont noyées sur une partie de leur longueur, l'extrémité des fibres étant laissée ouverte. Les joints sont mis en place de façon à délimiter une chambre étanche à l'intérieur du boîtier. A chaque extrémité du boîtier est fixé un embout par lequel se fait l'entrée, respectivement la sortie, du sang, lequel circule donc à l'intérieur des fibres, tandis que le boîtier comprend deux conduits latéraux débouchant dans la chambre étanche, par lesquels se font respectivement l'entrée et la sortie d'un liquide de dialyse, lequel circule donc à l'extérieur des fibres.

La fabrication des hémodialyseurs de ce type présente une difficulté technologique majeure qui réside dans la fabrication des joints précités (opération dite d'"empotage") lorsque les fibres utilisées doivent être conservées humides, quelle qu'en soit la raison. C'est le cas notamment lorsque les libres sont réalisées dans un matériau, tel le copolymère d'acrylonitrile et de méthallyle sulfonate de sodium connu sous la marque AN 69, qui est rendu microporeux par un procédé approprié et ne conserve ses caractéristiques structurelles que s'il est maintenu à l'état humide. C'est aussi le cas lorsque les fibres sont réalisées dans un matériau, telle la cellulose régénérée connue sous la marque CUPROPHAN, que l'on humidifie afin de faciliter la stérilisation à l'oxyde d'éthylène à laquelle l'hémodialyseur sera soumis à l'issue de sa fabrication.

La difficulté technologique mentionnée plus haut est due au fait qu'on ne connait pas actuellement de colles capables d'adhérer à des fibres ayant une teneur en eau supérieure à une certaine valeur, laquelle est largement dépassée dans le cas des fibres mentionnées plus haut.

Pour surmonter cette difficulté, le brevet français FR-A-2 150 107 propose un procédé de fabrication d'un joint à haute pression autour d'un faisceau de fibres creuses pour un appareil d'osmose inverse par lequel, pour permettre l'adhérence aux fibres de la colle utilisée pour former le joint, on sèche, avant de couler la colle, la partie des fibres concernées tandis que l'on maintient humide la partie des fibres qui jouera un rôle actif dans l'appareil. Selon ce brevet, pour arriver à ce résultat, on enduit les fibres d'un matériau élastomère à proximité d'une extrémité du faisceau de fibres pour créer une barrière entre l'extrémité des fibres, qui sera prise dans le-joint, et la partie active des fibres ; on immerge la partie active des fibres dans une solution aqueuse de gélatine qui, grâce à la barrière d'élastomère, ne peut remonter imbiber par capillarité l'extrémité des fibres ; on refroidit la solution pour solidifier la gélatine ; on sèche l'extrémité des fibres autour desquelles on coule ensuite une colle pour former le joint ; enfin, on enlève la gélatine entourant la partie active de fibres, qui a permis de maintenir cette partie de fibres humide pendant le séchage de l'extrémité du faisceau.

Ce procédé présente plusieurs inconvénients : il est lourd à mettre en oeuvre ; il est mal adapté à la fabrication des appareils à membrane ayant un faisceau de fibres sensiblement rectiligne, comme les hémodialyseurs décrits plus haut ; il nécessite de mettre au contact des fibres un certain nombre de substances qui constituent des facteurs potentiels de pollution, et sont à éviter absolument dans les appareils à membrane destinés à un usage médical.

La présente invention a pour but un procédé de séchage des extrémités d'un faisceau de fibres creuses qui soit adapté à une production industrielle, qui soit non polluant pour les fibres et qui convienne à la préparation de faisceau de fibres pour des appareils de structures diverses.

Pour atteindre ce but, on prévoit, conformément à l'invention, un procédé de séchage des extrémités d'un faisceau de fibres creuses pour un appareil à membrane constituée de fibres creuses, caractérisé en ce qu'il consiste à placer le faisceau dans une gaine présentant au moins une ouverture axiale et au moins une ouverture latérale à chacune de ses extrémités et à pulser de l'air simultanément par les ouvertures axiales, les débits d'air à l'entrée de la gaine ainsi que la dimension des ouvertures étant choisis pour que l'air pénétrant à chaque entrémité de la gaine en ressorte intégralement par l'ouverture latérale correspondante. Avantageusement, on utilise, comme gaine, un boîtier de l'appareil à membrane destiné à contenir le faisceau de fibres creuses.

De préférence, les débits d'air à l'entrée de la gaine sont sensiblement égaux, les ouvertures axiales de la gaine ayant sensiblement les mêmes dimensions, de même que les ouvertures latérales.

Avantageusement, l'air pulsé est chauffé. Par rapport à de l'air à température ambiante ayant la même humidité absolue (que,'dans tous les cas, on s'efforce de maintenir aussi faible que possible), l'air chaud présente l'avantage de provoquer un séchage plus rapide.

L'invention a également pour objet un dispositif pour la mise en oeuvre de ce procédé. Ce dispositif comporte au moins un organe de séchage comprenant deux éléments de raccord pour relier respectivement à une source d'air pulsé les extrémités d'une gaine prévue pour contenir le faisceau, cette gaine comprenant, à chacune de ses extrémités, au moins une ouverture axiale par laquelle l'air pénètre dans la gaine et au moins une ouverture latérale par laquelle l'air sort de la gaine, cette gaine étant avantageusement constituée par un boîtier de l'appareil à membrane destiné à contenir le faisceau de fibres creuses. Le dispositif comprend avantageusement des moyens de chauffage de l'air.

De préférence, les ouvertures axiales de la gaine ont sensiblement les mêmes dimensions, de même que les ouvertures latérales, et les éléments de raccord sont reliés à une même source d'air chaud pulsé par des canalisations ayant sensiblement même longueur et même diamètre.

Avantageusement, le dispositif de séchage comporte une pluralité d'organes de séchage reliés à une source d'air chaud pulsé unique et chaque organe de séchage comprend des moyens de fuite calibrés pour que les débits de l'air s'échappant respectivement d'un organe de séchage à vide et d'un organe de séchage mis en place sur une gaine contenant un faisceau de fibres soit sensiblement égaux. Cette disposition présente l'intérêt que le séchage en série de faisceaux de fibres creuses est homogène d'un faisceau à l'autre, que le dispositif de séchage soit totalement ou partiellement en charge.

D'autres avantages de l'invention apparaîtront à la lecture de la description qui suit, faite en relation aux dessins annexés sur lesquels:
La figure 1 est une vue schématique, partiellement en coupe, du dispositif de séchage selon l'invention;
La figure 2 est une vue en perspective schématique d'un dispositif de séchage pour une pluralité de faisceaux selon l'invention ; et
La figure 3 est une vue en coupe axiale partielle d'un mode de réalisation d'un organe de séchage pour le dispositif selon l'invention.

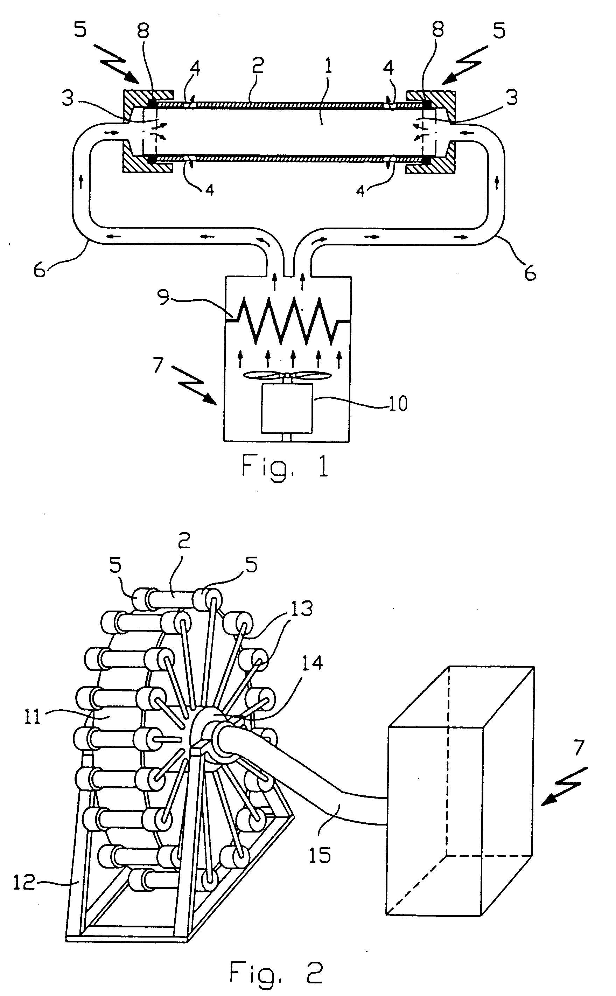

Le dispositif de séchage représenté schématiquement sur la figure 1 comprend un organe de séchage pour un faisceau 1 de fibres creuses disposé dans une gaine tubulaire 2 ouverte à ses extrémités (ouvertures axiales 3) et munie d'au moins une ouverture latérale 4 (deux sur la figure) située à proximité de chacune de ses extrémités. L'organe de séchage comporte deux éléments de raccord 5 disposés en vis-à-vis l'un de l'autre sur un même axe pour raccorder respectivement les extrémités de la gaine 2 à deux canalisations 6 reliées à une source d'air chaud pulsé 7. Chaque élément de raccord 5 a la forme d'une capsule présentant un épaulement intérieur muni d'un joint 8 pour s'emboîter de façon étanche sur une extrémité de la gaine 1 tout en laissant découvertes les ouvertures latérales 4, la canalisation 6 débouchant dans l'élément de raccord 5 en arrière du plan du joint 8 par rapport à l'ouverture de l'élément de raccord. La source d'air chaud pulsé 7 comprend classiquement des moyens de chauffage 9, des moyens de ventilation 10 ainsi qu'un système de régulation (non représenté) pour maintenir constants et égaux à des valeurs prédéterminées, le débit et la température de l'air pulsé dans les canalisations 6. Si l'air ambiant qui est aspiré par les moyens de ventilation 10 a une humidité absolue non négligeable, il est avantageusement soumis à un traitement de dessication en amont du dispositif de séchage de façon que l'air passant sur l'extrémité des fibres ait une humidité absolue aussi faible que possible.

Pour que le but de l'invention soit atteint grâce à ce dispositif, c'est-à-dire pour que ce dispositif soit apte à sécher les extrémités du faisceau 1 de fibres humides et seulement ses extrémités, on règle les débits d'air à l'entrée des éléments de raccord 5 et on choisit les diamètres des ouvertures axiales 3 et latérales 4 de la gaine 2 de façon qu'il ne s'établisse aucune circulation d'air à l'intérieur de la gaine 2 lorsque le dispositif fontionne, c'est-à-dire de façon que l'air qui pénètre par l'ouverture axiale 3 de chaque extrémité de la gaine 2 ressorte intégralement, après être passé entre les extrémités des fibres, par les ouvertures latérales 4 les plus proches. En d'autres termes, on maintient l'équilibre des pressions aux extrémités de la gaine 2. Il est facile d'obtenir ce résultat en prévoyant un organe de séchage ayant des éléments de raccord 5 identiques reliés respectivement par des canalisations 6 de même longueur et de même section à une source d'air chaud pulsé 7 unique, la gaine 2 utilisée pour contenir le faisceau de fibres 1 ayant par ailleurs des extrémités symétriques.

La mise en oeuvre et le fonctionnement de ce dispositif de séchage sont les suivants : on introduit le faisceau de fibres 1 à sécher dans la gaine 2, puis on place la gaine dans l'organe de séchage en emmanchant les éléments de raccord 5 sur les extrémités de la gaine et en les maintenant appliqués, par tout moyen de contention connu, avec une force suffisante pour que l'étanchéité soit créée au niveau des joints 8. La source d'air chaud pulsé 7 ayant été mise en fonctionnement, de l'air chaud pénètre par les ouvertures axiales 3 de la gaine 2, s'écoule entre les fibres, à leurs extrémités, et s'échappe par les ouvertures latérales 4 sans circuler d'une extrémité à l'autre de la gaine. Lorsque le temps de séchage nécessaire à l'abaissement souhaité du degré hygrométrique des extrémités du faisceau de fibres 1 s'est écoulé, la gaine 2 est retirée de l'organe de séchage et le faisceau en est extrait pour traitement ultérieur.

A titre d'exemple, pour sécher les extrémités d'un faisceau de 8500 fibres en AN 69 contenant environ vingt pour cent d'eau, à un niveau permettant l'empotage de ce faisceau au moyen des colles connues actuellement, on les soumet, pendant environ vingt minutes, à un flux d'air ayant une température d'environ quarante degrés Celcius et un débit d'environ dix mètres cubes/heure.

De façon avantageuse, lorsque le procédé et le dispositif de séchage qui viennent d'être décrits sont mis en oeuvre pour des faisceaux de fibres creuses destinés à équiper des appareils à membrane comprenant un boîtier ayant les caractéristiques de la gaine 2 (c'est-à-dire muni d'ouvertures axiales et latérales à leurs extrémités), comme c'est le cas des hémodialyseurs décrits plus haut, on utilise ces boîtiers à la place des gaines 2 dans le dispositif de séchage, ce qui permet de faire l'économie de gaines spécifiques et d'empoter les faisceaux directement après leur séchage, sans manipulation intermédiaire.

La figure 2 représente un dispositif de séchage pour une pluralité de faisceaux de fibres creuses. Ce dispositif comprend un carrousel constitué par un tambour 11 d'axe horizontal monté sur un bâti 12 de façon à pouvoir tourner autour de son axe sous l'action d'un organe d'entraînement pas-à-pas (non représenté). A la périphérie du tambour 11, sont disposés, à intervalles réguliers, une pluralité d'organes de séchage d'axe parallèle à l'axe du tambour, dont les éléments de raccord 5 sont reliés par des canalisations 13 de longueurs et de sections égales à un distributeur central 14, lui-même relié par une canalisation 15 à une source d'air chaud pulsé 7 unique.

Ce carrousel est équipé en outre d'une unité de chargement et d'une unité de déchargement automatiques (non représentées) pour charger et décharger simultanément respectivement une gaine 2 contenant un faisceau 1 humide et une gaine 2 contenant un faisceau 1 partiellement séché, la disposition relative de ces unités de chargement et de déchargement par rapport à la périphérie du carrousel ainsi que la vitesse de rotation du carrousel étant choisies pour que, entre le moment de son introduction et le moment de son retrait sur/du carrousel, chaque faisceau 1 ait perdu, au niveau de ses extrémités, la quantité d'eau rendant possible son empotage.

Pour que ce dispositif puisse servir au séchage de faisceaux 1 de longueurs différentes, la distance entre les élément de raccord 5 de chaque organe de séchage est avantageusement réglable. En outre, pour que les faisceaux 1 passant sur le carrousel soient tous traités de la même façon, c'est-à-dire, la température de l'air pulsé et la vitesse du carrousel étant maintenues sensiblement constantes, pour que les flux d'air auxquels sont exposés les extrémités de chaque faisceau aient toujours le même débit, quel que soit le chargement du carrousel, on prévoit, au niveau de chaque organe de séchage, un système de fuite calibrée tel qu'il s'échappe d'un organe de séchage à vide le même débit d'air que d'un organe de séchage dans lequel est disposée une gaine 2 contenant un faisceau 1.

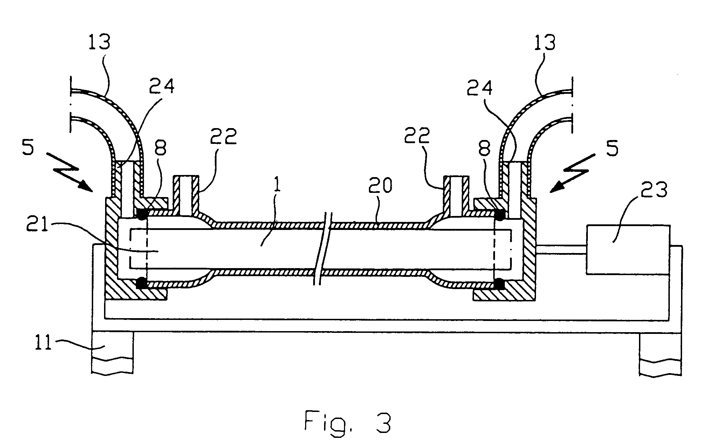

On a représenté sur la figures 3 un organe de séchage muni d'un tel système de fuite calibrée et équipé en outre de moyens de réglage de la distance de ses éléments de raccord 5. Dans ce mode de réalisation, qui est destinée au séchage des extrémités d'un faisceau de fibres 1 pour un hémodialyseur du type mentionné plus haut, on utilise le boîtier tubulaire 20 de l'hémodialyseur comme gaine pour le faisceau 1, ce boîtier comprenant donc à chacune de ses extrémités une ouverture axiale 21 et une ouverture latérale 22 (canal d'entrée/sortie de dialysat).

L'un des éléments de raccord 5 de cet organe de séchage est fixé au tambour 11 d'un carrousel d'un dispositif de séchage tel que représenté sur la figure 2. L'autre élément de raccord 5 est monté mobile en translation en vis-à-vis de l'élément de raccord 5 fixe, au moyen d'un vérin 23 assujetti lui-même au tambour 11. Le vérin 23 permet d'écarter et de rapprocher les éléments de raccord 5 pour la mise en place et le retrait de boîtiers 20 de différentes longueurs. Lors de la mise en place du boîtier 20 dans l'organe de séchage, le vérin est actionné de façon à rapprocher les organes de raccord 5 jusqu'à ce que les joints 8 soient légèrement écrasés entre les extrémités du boîtier et l'épaulement intérieur de l'élément de raccord 5 correspondant. De la sorte, la connexion entre les éléments de raccord 5 et le boîtier 20 est étanche.

Pour que la présence ou l'absence d'un boîtier 20 dans cet organe de séchage n'ait pas d'influence sensible sur la distribution d'air chaud au niveau des autres organes de séchage du dispositif de séchage à organes de séchage multiples, chaque organe de raccord 5 est connecté à la canalisation 13 correspondante par une tubulure 24 débouchant librement à l'intérieur de ce raccord et ayant un diamètre intérieur inférieur ou égal à celui d'un canal latéral 22 d'un boîtier 20 de dialyseur: la tubulure 24 provoque ainsi, sur le circuit d'air pulsé, une perte de charge devant laquelle la perte de charge engendrée par la présence d'un boîtier 20 dans l'organe de séchage est négligeable, c'est-à-dire qu'elle définit une fuite calibrée telle que l'air qui s'échappe de l'organe de séchage à vide a sensiblement le même débit que l'air qui s'échappe des canaux latéraux d'un boîtier 20 pris dans l'organe de séchage.

Bien que les organes de séchage représentés sur les figures soient adaptés au séchage de faisceaux de fibres creuses sensiblement rectilignes, il va de soit qu'en changeant la disposition respective de leurs éléments de raccord, ils pourraient être utilisés pour le séchage de faisceaux ayant une autre configuration, de faisceaux en forme de U notamment. Le procédé est également applicable au séchage des extrémités d'un faisceau de fibres replié sur lui même, la gaine utilisée alors étant fermée à une extrémité et l'organe de séchage ne comprenant qu'un élément de raccord.

## Revendications

1. Procédé de séchage des extrémités d'un faisceau (1) de fibres creuses pour un appareil à membrane constituée de fibres creuses, caractérisé en ce qu'il consiste à placer le faisceau (1) dans une gaine (2 ; 20) présentant au moins une ouverture axiale (3 ; 21) et au moins une ouverture latérale (4 ; 22) à chacune de ses extrémités et à pulser de l'air simultanément par les ouvertures axiales (3 ; 21), les débits d'air à l'entrée de la gaine (2 ; 20) ainsi que la dimension des ouvertures (3 ; 21, 4 ; 22) étant choisis pour que l'air pénétrant à chaque extrémité de la gaine (2 ; 20) en ressorte intégralement par l'ouverture latérale (4 ; 22) correspondante.

2. Procédé de séchage selon la revendication 1, caractérisé en ce que les débits d'air à l'entrée de la gaine (2 ; 20) sont sensiblement égaux, les ouvertures axiales (3 ; 21) de la gaine (2 ; 20) ayant sensiblement les mêmes dimensions, de même que les ouvertures latérales (4 ; 22).

3. Procédé de séchage selon une des revendications 1 et 2, caractérisé en ce que l'air pulsé est chauffé.

4. Procédé de séchage selon une des revendications 1 à 3, caractérisé en ce qu'on utilise, comme gaine, un boîtier (20) de l'appareil à membrane destiné à contenir le faisceau (1) de fibres creuses.

5. Dispositif de séchage des extrémités d'un faisceau (1) de fibres creuses pour un appareil à membrane de fibres creuses, caractérisé en ce qu'il comporte au moins un organe de séchage comprenant deux éléments de raccord (5) pour relier respectivement à une source d'air pulsé (7) les extrémités d'une gaine (2 ; 20) prévue pour contenir le faisceau (1), cette gaine (2 ; 20) comprenant, à chacune de ses extrémités, au moins une ouverture axiale (3 ; 21) pour l'introduction de l'air dans la gaine et au moins une ouverture latérale (4 ; 22) pour l'évacuation de l'air ayant passé sur l'extrémité des fibres hors de la gaine (2 ; 20).

6. Dispositif de séchage selon la revendication 5, caractérisé en ce qu'il comprend des moyens de chauffage (9) pour chauffer l'air pulsé.

7. Dispositif de séchage selon une des revendications 5 et 6, caractérisé en ce que les ouvertures axiales (3 ; 21) de la gaine (2 ; 20) ont sensiblement les mêmes dimensions, de même que les ouvertures latérales (4 ; 22), et en ce que les éléments de raccord (5) sont reliés à la même source d'air pulsé (7) par des canalisations (6; 13) ayant sensiblement même longueur et même diamètre.

8. Dispositif de séchage selon une des revendications 5 à 7, caractérisé en ce qu'il comporte une pluralité d'organes de séchage.

9. Dispositif de séchage selon la revendication 8, caractérisé en ce que chaque organe de séchage comprend des moyens de fuite calibrés (24) pour que les débits de l'air s'échappant respectivement d'un organe de séchage à vide et d'une gaine (2 ; 20) contenant un faisceau (1) disposée dans un organe de séchage soient sensiblement égaux.

10. Dispositif de séchage selon des revendications 5 à 9, caractérisé en ce qu'il comporte des moyens (23) pour régler la distance entre les éléments de raccord (5) d'un même organe de séchage.

11. Dispositif de séchage selon une des revendications 5 à 10, caractérisé en ce que la gaine est constituée par un boîtier (20) de l'appareil à membrane destiné à contenir le faisceau (1) de fibres creuses.

## Patentansprüche

1. Verfahren zur Trocknung der Enden eines Hohlfadenbündels (1) für eine Vorrichtung mit einer aus Hohlfäden gebildeten Membran, dadurch gekennzeichnet, daß es daraus besteht, das Bündel (1) in eine Hülle (2; 20) zu legen, die zumindest eine axiale Öffnung (3; 21) und zumindest eine seitliche Öffnung (4; 22) an jedem ihrer Enden aufweist, und gleichzeitig Luft durch die axialen Öffnungen (3; 21) zu stoßen, wobei die Luftausstöße am Eingang der Hülle (2; 20) sowie die Abmessung der Öffnungen (3; 21, 4; 22) so gewählt sind, daß die Luft, die an jedem Ende der Hülle (2; 20) eindringt, durch die entsprechende seitliche Öffnung (4; 22) wieder restlos austritt.

2. Verfahren zur Trocknung gemäß Anspruch 1, dadurch gekennzeichnet, daß die Luftausstöße am Eingang der Hülle (2; 20) praktisch gleich sind, wobei die axialen Öffnungen (3; 21) der Hülle (2; 20), ebenso wie die seitlichen Öffnungen (4; 22), praktisch die gleichen Abmessungen haben.

3. Verfahren zur Trocknung gemäß einem der Ansprüche 1 und 2, dadurch gekennzeichnet, daß die ausgestoßene Luft erwärmt wird.

4. Verfahren zur Trocknung gemäß einem der Ansprüche 1 bis 3, dadurch gekennzeichnet, daß man als Hülle ein Gehäuse (20) der Vorrichtung mit Membran benutzt, das dazu bestimmt ist, das Hohlfadenbündel (1) aufzunehmen.

5. Vorrichtung zur Trocknung der Enden eines Hohlfadenbündels (1) für eine Vorrichtung mit einer aus Hohlfäden gebildeten Membran, dadurch gekennzeichnet, daß sie zumindest ein Trocknungsorgan aufweist, das zwei Anschlußteile (5) aufweist, um die Enden einer zur Aufnahme des Bündels (1) vorgesehenen Hülle (2; 20) jeweils mit einer Quelle der ausgestoßenen Luft (7) zu verbinden, wobei diese Hülle (2; 20) an jedem ihrer Enden zumindest eine axiale Öffnung (3; 21) zum Einführen der Luft in die Hülle und zumindest eine seitliche Öffnung (4; 22) zur Abführung der Luft aufweist, die über das Ende der Fäden außerhalb der Hülle (2; 20) geströmt ist.

6. Vorrichtung zur Trocknung gemäß Anspruch 5, dadurch gekennzeichnet, daß sie Erwärmungseinrichtungen (9) zur Erwärmung der ausgestoßenen Luft aufweist.

7. Vorrichtung zur Trocknung gemäß einem der Ansprüche 5 und 6, dadurch gekennzeichnet, daß die axialen Öffnungen (3; 21) der Hülle (2; 20), ebenso wie die seitlichen Öffnungen (4; 22), praktisch die gleichen Abmessungen haben, und dadurch, daß die Anschlußteile (5) durch Leitungen (6; 13), die praktisch die gleiche Lange und den gleichen Durchmesser haben, mit derselben Quelle der ausgestoßenen Luft (7) verbunden sind.

8. Vorrichtung zur Trocknung gemäß einem der Ansprüche 5 bis 7, dadurch gekennzeichnet, daß sie eine Mehrzahl von Trocknungsorganen aufweist.

9. Vorrichtung zur Trocknung gemäß Anspruch 8, dadurch gekennzeichnet, daß jedes Trocknungsorgan kalibrierte Durchlässigkeitseinrichtungen (24)aufweist, damit die Luftausstöße, die jeweils aus einem leeren Trocknungsorgan und aus einer ein Bündel (1) enthaltenden Hülle (2; 20) ausströmen, die in einem Trocknungsorgan angeordnet ist, praktisch gleich sind.

10. Vorrichtung zur Trocknung gemäß den Ansprüchen 5 bis 9, dadurch gekennzeichnet, daß sie Einrichtungen (23) aufweist zur Einstellung des Abstands zwischen den Anschlußteilen (5) eines selben Trocknungsorgans.

11. Vorrichtung zur Trocknung gemäß einem der Ansprüche 5 bis 10, dadurch gekennzeichnet, daß die Hülle von einem Gehäuse (20) der Vorrichtung mit Membran gebildet ist, das dazu bestimmt ist, das Hohlfadenbündel (1) aufzunehmen.

## Claims

1. A method for drying the ends of a bundle (1) of hollow fibres for a device with a membrane constituted by hollow fibres, characterised in that it comprises the steps of :
- placing the bundle (1) into a sheath (2; 20) having at least one axial opening (3; 21) and at least one lateral opening (4; 22) at each one of its end, and
- pulsing air simultaneously through the axial openings (3; 21), the air flow rates at the inlet of the sheath (2; 20), as well as the dimension of the openings (3; 21, 4; 22) being chosen so that the air penetrating at each end of the sheath (2; 20) integrally emerges therefrom through the corresponding lateral opening (4; 22).

2. The method according to claim 1, characterized in that the air flow rates at the inlet of the sheath (2; 20) are substantially equal, the axial openings (3; 21) of the tube (2; 20) having substantially the same dimensions, as well as the lateral openings (4; 22).

3. The method according to one of the claims 1 and 2, characterized in that the pulsed air is heated.

4. The method according to one of the claims 1 to 3, characterized in that the sheath that is used is a casing (20) of the membrane device, which is intended to contain the bundle (1) of the hollow fibres.

5. An apparatus for drying the ends of a bundle (1) of hollow fibres for a device with a membrane of hollow fibres, characterized in that it includes at least one drying element comprising two connecting elements (5) for respectively connecting the ends of a sheath (2; 20) provided for containing the bundle (1) to a source of pulsed air (7), this sheath (2; 20) comprising at each one of its ends at least one axial opening (3; 21) for introducing air into the sheath and at least one lateral opening (4; 22) for evacuating the air having passed over the end of the fibres outside the tube (2; 20).

6. The apparatus according to claim 5, characterized in that it includes heating means (9) for heating the pulsed air.

7. The apparatus according to one of the claims 5 and 6, characterized in that the axial openings (3; 21) of the sheath (2; 20) have substantially the same dimensions, as well as the lateral openings (4; 22), and in that the connecting elements (5) are connected to the same source of pulsed air (7) via lines (6; 13) having substantially the same length and the same diameter.

8. The apparatus according to one of the claims 5 to 7, characterized in that it comprises a plurality of drying elements.

9. The apparatus according to claim 8, characterized in that each drying element comprises calibrated leakage means (24) to ensure that the flow rates of the air escaping respectively from a drying element which is not connected to a sheath (2; 20) and from a sheath (2; 20) containing a bundle (1) disposed in a drying element are substantially equal.

10. The apparatus according to one of the claims 5 to 9, characterized in that it comprises means (23) for adjusting the distance between the connecting elements (5) of the same drying element.

11. The apparatus according to one of the claims 5 to 10, characterized in that the sheath is constituted by a casing (20) of the device with the membrane, which casing is intended to contain the bundle (1) of the hollow fibres.
